# FASCICULE DE BREVET EUROPEEN

(11) **EP 3 215 383 B1**
(45) Date de publication et mention de la délivrance du brevet: **11.07.2018**
(21) Numéro de dépôt: 14812780.6
(22) Date de dépôt: 04.11.2014
(51) Int. Cl.: B60K 7/00, B60K 1/04, B60K 17/30, B60K 17/04, B62D 5/04, B62D 7/02

(54) **ENGIN ROULANT À DÉPLACEMENT AUTOMATIQUE EXEMPT DE CONDUCTEUR ASSIS OU MARCHAND DERRIÈRE L'ENGIN, ENCORE APPELÉ ROBOT**
ROLLENDE MASCHINE ZUR AUTOMATISCHEN FORTBEWEGUNG OHNE SITZENDEN ODER HINTER DER MASCHINE HERLAUFENDEN FAHRER, AUCH ROBOTER GENANNT
ROLLING MACHINE FOR AUTOMATIC MOVEMENT WITHOUT A SITTING DRIVER OR A DRIVER WALKING BEHIND THE MACHINE, ALSO CALLED ROBOT

(43) Date de publication de la demande: 13.09.2017
(73) Titulaire: France Reducteurs, 85500 Les Herbiers (FR)
(72) Inventeur: BARENDRECHT, Wouter, 49300 Cholet (FR)
(74) Mandataire: Godineau, Valérie
(86) Numéro de dépôt international: PCT/FR2014/052792
(87) Numéro de publication internationale: WO 2016/071579

(56) Documents cités:
- WO-A1-2007/008148
- FR-A1- 3 003 812
- US-A- 5 369 347
- US-A1- 2010 212 980
- US-A1- 2012 083 376

## Description

La présente invention concerne un engin roulant à déplacement automatique exempt de conducteur assis ou marchand derrière l'engin, encore appelé robot.

Elle concerne plus particulièrement un engin comprenant au moins des moyens d'entrainement en déplacement de l'engin, une unité de pilotage des moyens d'entrainement en déplacement de l'engin, des moyens de fourniture de données d'entrée à ladite unité de pilotage, ladite unité de pilotage étant configurée pour, à partir desdites données d'entrée, piloter lesdits moyens d'entrainement en déplacement de l'engin, ces moyens d'entrainement en déplacement de l'engin comprenant au moins trois roues, l'une des roues étant une roue motrice et directrice.

Un tel engin est notamment utilisé, dans le cas de robot aspirateur ou de robot de lavage, pour le nettoyage de surface, ou dans le cas de robot de tonte, pour l'entretien d'espaces verts.

Généralement, les robots sont équipés d'au moins deux roues motorisées ou plus pour réaliser la propulsion de l'engin. Chaque roue motorisée doit pouvoir entraîner à elle seule l'engin dans le cas de virage.

En effet, pour diriger l'engin, on utilise la fonction de différentiel. Ainsi pour tourner vers la droite, il faut que la roue de gauche ait une vitesse supérieure par rapport à la roue de droite, et inversement pour tourner vers la gauche. Ce principe impose donc de faire varier la vitesse de chaque roue indépendamment l'une de l'autre.

De ce fait, les moteurs ne fonctionnent pas tout le temps au point de rendement maximum. Il en résulte une consommation d'énergie plus élevée et un coût plus élevé des moyens de propulsion et de direction en raison du nombre de moteurs et de la puissance nécessaire pour chaque moteur.

Une tentative a été faite de réaliser un robot avec une roue directrice et motrice. Toutefois le robot en résultant ne donne pas satisfaction car il présente un encombrement important et un risque de patinage élevé.

Des robots selon le préambule de la revendication 1 sont connus des documents WO 2007/008148 A1 et US 5 369 347 A.

Un but de la présente invention est donc de proposer un engin du type précité dont la conception permet de conserver une vitesse constante si possible au point de rendement maximal au niveau du moteur de propulsion pendant les phases de changement de direction de l'engin.

Un autre but de la présente invention est de proposer un engin dont la conception permet de réduire la consommation en énergie et le coût des moteurs en raison de la possibilité d'utiliser des moteurs de puissance plus faible comparativement à l'état de la technique.

Un autre but de la présente invention est de proposer un engin dont la conception permet de réduire l'encombrement de l'ensemble tout en limitant les risques de patinage.

A cet effet, l'invention a pour objet un engin roulant à déplacement automatique exempt de conducteur assis ou marchant derrière l'engin, encore appelé robot, cet engin comprenant au moins des moyens d'entrainement en déplacement de l'engin, une unité de pilotage des moyens d'entrainement en déplacement de l'engin, des moyens de fourniture de données d'entrée à ladite unité de pilotage, ladite unité de pilotage étant configurée pour, à partir desdites données d'entrée, piloter lesdits moyens d'entrainement en déplacement de l'engin, ces moyens d'entrainement en déplacement de l'engin comprenant au moins trois roues, l'une des roues étant une roue motrice et directrice, caractérisé en ce que ladite roue motrice et directrice se présente sous forme d'un ensemble électromécanique comprenant, pour la propulsion de la roue , un groupe moteur d'entrainement en rotation de la roue, au moins une batterie d'alimentation en énergie du groupe moteur, et un arbre autour duquel la roue est apte à être entrainée en rotation par ledit groupe moteur, ledit groupe moteur d'entrainement en rotation de la roue motrice et directrice et la au moins une batterie d'alimentation en énergie du groupe moteur étant logés à l'intérieur de la roue motrice et directrice.

Grâce au fait que le groupe moteur d'entrainement en rotation de la roue motrice et directrice et les batteries d'alimentation en énergie du groupe moteur sont logés à l'intérieur de la roue motrice et directrice, il en résulte un encombrement réduit de l'ensemble et un risque de patinage moindre, le moteur et les batteries formant lest de la roue.

De préférence, ledit ensemble électromécanique comprend, pour la direction de la roue, une base de liaison dudit ensemble à l'engin, ladite base, munie d'une ouverture traversante de passage de roue, étant surmontée, côté face dite du dessus de la base, d'une coiffe, venant à recouvrement de l'ouverture, cette coiffe portant l'arbre autour duquel la roue, qui fait partiellement saillie côté face du dessous de la base pour venir en appui au sol, est apte à être entraînée en rotation, ladite coiffe étant, par rapport à la base, montée, par l'intermédiaire de moyens d'entrainement, mobile à rotation autour d'un axe dit vertical passant par l'ouverture et s'étendant sensiblement orthogonalement à l'arbre de roue .

Grâce à cette conception, il en résulte à nouveau un ensemble compact de faible encombrement.

De préférence, les roues autres que la roue motrice et directrice sont des roues non motrices et non directrices.

De préférence, les moyens de fourniture de données d'entrée comprennent au moins des moyens d'acquisition de données et/ou une interface d'entrée de données, encore appelé interface homme machine, et/ou une mémoire de stockage de données prédéfinies.

De préférence, les moyens d'acquisition de données incluent au moins un capteur de la position angulaire de la coiffe par rapport à la base et, de préférence, au moins un capteur de géolocalisation.

De préférence, ladite interface comprend au moins une télécommande et/ou un écran tactile et/ou un clavier.

De préférence, l'arbre de roue fait saillie à chacune de ses extrémités de la roue pour être retenu, au niveau de chacune de ses extrémités, à l'intérieur de la coiffe, de préférence par l'intermédiaire de logements formant paliers ménagés à l'intérieur de la coiffe.

De préférence encore, l'arbre de roue est formé de deux demi-arbres et de moyens de liaison des deux demi-arbres entre eux.

En variante, l'arbre de roue peut être formé d'un seul tenant.

De préférence, le groupe moteur d'entrainement en rotation de la roue comprend un moteur et un réducteur, ledit réducteur étant, d'une part, en prise avec l'arbre d'entrainement du moteur, d'autre part, couplé directement, ou par l'intermédiaire d'au moins une pièce tournante dite de transmission de mouvement, à la roue, pour l'entrainement en rotation de la roue.

De préférence, le réducteur comprend un train épicycloïdal à au moins un étage.

De préférence, la coiffe présente une forme générale hémisphérique.

De préférence, le groupe moteur d'entrainement en rotation de la roue et les moyens d'entrainement en rotation de la coiffe sont configurés pour être pilotés par l'unité de pilotage à partir des données fournies par les moyens de fourniture de données d'entrée.

De préférence, la coiffe est maintenue en applique sur la base par un couvercle délimitant, avec au moins une partie de la base, un boitier à l'intérieur duquel sont disposés au moins les moyens d'entrainement en rotation de la coiffe. Grâce à cette réalisation, les moyens d'entraînement en rotation de la coiffe peuvent être immergés dans de la graisse ou un autre lubrifiant, sans risque de fuite de ces derniers.

De préférence, les moyens d'entrainement en rotation de la coiffe sont des moyens moteurs formés par au moins une pièce d'engrènement, telle qu'une vis sans fin ou un pignon, porté par la base et en prise avec une couronne dentée portée par la coiffe. Il en résulte un encombrement limité de l'ensemble.

De préférence, la base affecte la forme générale d'un plateau muni d'une ouverture traversante formant l'ouverture traversante de passage de roue. Cette base peut être réalisée d'une seule pièce avec le châssis de l'engin, dans le cas d'un châssis monobloc, ou réalisée sous forme d'une pièce rapportée sur ledit châssis.

L'invention sera bien comprise à la lecture de la description suivante d'exemples de réalisation, en référence aux dessins annexés dans lesquels :
- La figure 1 représente une vue partielle en perspective d'un engin équipé d'un ensemble électromécanique conforme à l'invention.

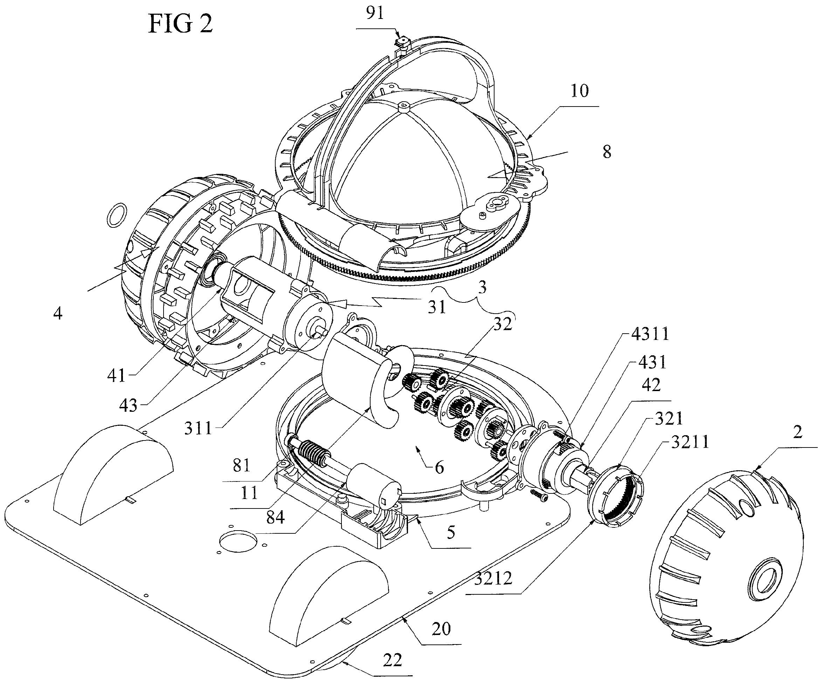

- La figure 2 représente une vue en position éclatée des éléments de la figure 1.

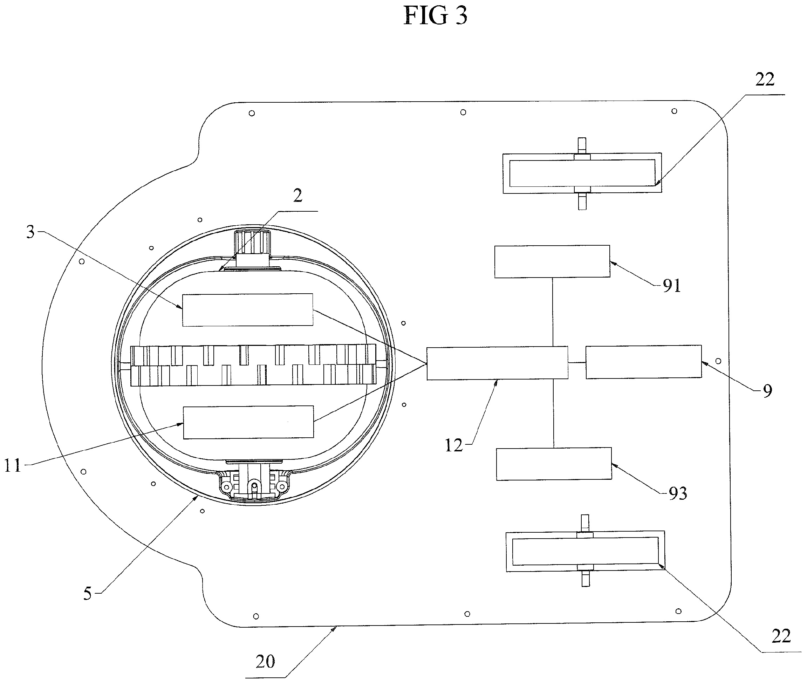

- La figure 3 représente une vue de dessous de l'engin représenté à la figure 1.

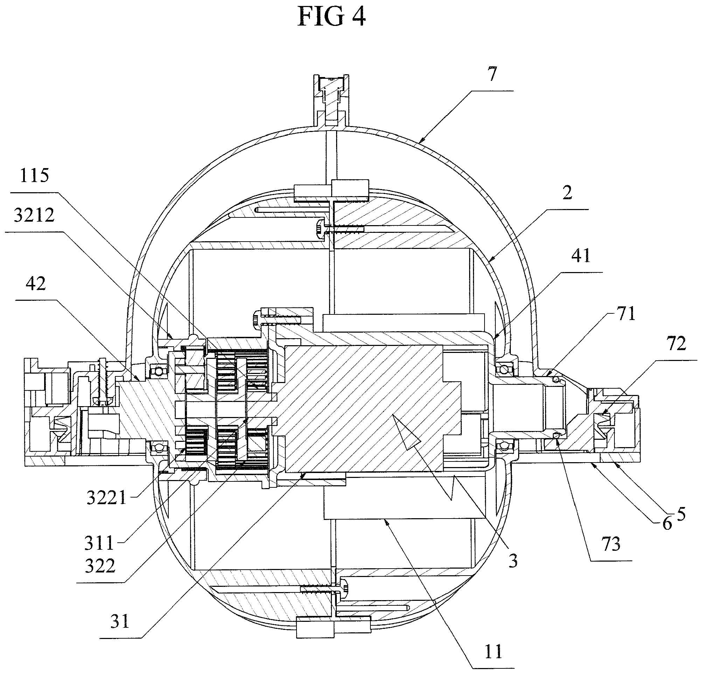

- La figure 4 représente une vue de dessus d'un ensemble électromécanique conforme à l'invention, la coiffe ayant été réalisée transparente pour visualiser l'intérieur de l'engin et le couvercle ayant été omis.

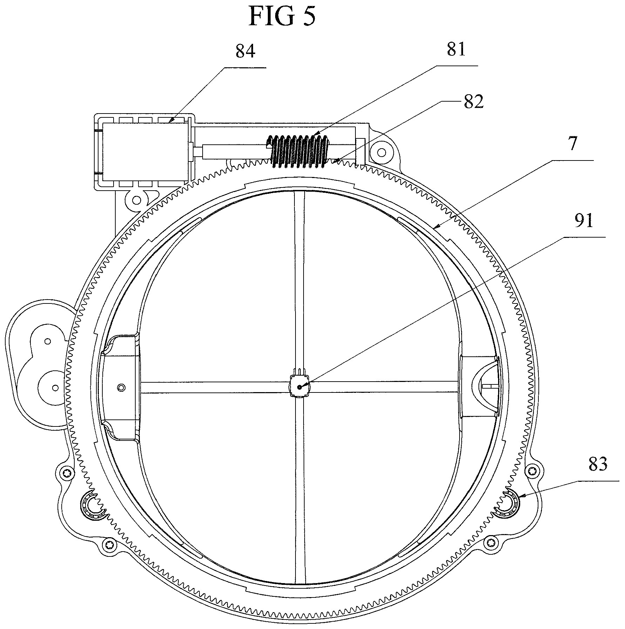

- La figure 5 représente une vue en coupe de l'engin représenté à la figure 1.

Comme mentionné ci-dessus, l'invention a pour objet un engin 20 roulant à déplacement automatique exempt de conducteur assis ou marchant derrière l'engin.

Cet engin 20, encore appelé robot, est ici plus particulièrement destiné à permettre la tonte automatique de gazon. Cet engin 20 comprend des moyens d'entraînement en déplacement de l'engin, une unité 12 de pilotage des moyens d'entraînement en déplacement de l'engin, des moyens 9 de fourniture de données d'entrée à ladite unité de pilotage.

Ladite unité 12 de pilotage est configurée pour, à partir desdites données d'entrée, piloter les moyens d'entraînement en déplacement de l'engin.

Ces moyens d'entraînement en déplacement de l'engin comprennent ici trois roues. L'une des roues, représentée en 2 aux figures, est une roue motrice et directrice, tandis que les autres roues 22 sont non motrices et non directrices.

Dans l'exemple représenté, la roue 2 motrice et directrice se présente sous forme d'un ensemble 1 électromécanique comprenant pour la propulsion de la roue 2, un groupe 3 moteur d'entrainement en rotation de la roue et des batteries logés à l'intérieur de la roue, et un arbre 4 autour duquel la roue 2 est apte à être entrainée en rotation par ledit groupe 3 moteur, et pour la direction de la roue 2, une base 5 de liaison dudit ensemble 1 à l'engin 20, ladite base 5, munie d'une ouverture 6 traversante de passage de roue, étant surmontée, côté face dite du dessus de la base 5, d'une coiffe 7, venant à recouvrement de l'ouverture 6, cette coiffe 7 portant l'arbre 4 autour duquel la roue 2, qui fait partiellement saillie côté face du dessous de la base pour venir en appui au sol, est apte à être entraînée en rotation, ladite coiffe 7 étant, par rapport à la base 5, montée, par l'intermédiaire de moyens 8 d'entrainement, mobile à rotation autour d'un axe XX' dit vertical passant par l'ouverture 6 et s'étendant sensiblement orthogonalement à l'arbre 4 de roue.

Dans les exemples représentés, l'arbre 4 de roue fait saillie à chacune de ses extrémités de la roue 2 pour être retenu, au niveau de chacune de ses extrémités, à l'intérieur de la coiffe 7, par l'intermédiaire de logements 71 formant paliers ménagés à l'intérieur de la coiffe 7.

En particulier, l'arbre 4 de roue est formé de deux demi-arbres 41,42 et de moyens 43 de liaison des deux demi-arbres 41, 42 entre eux.

Ces moyens 43 de liaison sont ici formés par un corps 43 tubulaire interposé entre les deux demi-arbres 41, 42 disposés chacun au niveau d'une extrémité dudit corps. Ce corps tubulaire loge au moins partiellement le groupe 3 moteur d'entraînement en rotation de la roue. Ce corps 43 tubulaire s'étend à l'intérieur de la roue tandis que les deux demi-arbres font au moins partiellement saillie de la roue pour être retenus à l'intérieur de la coiffe par l'intermédiaire des logements 71 formant paliers ménagés à l'intérieur de la coiffe.

Le corps 43 tubulaire est fermé au moins partiellement à chacune de ses extrémités par un flasque 431 et les deux demi-arbres 41, 42 sont couplés chacun à l'un desdits flasques de fermeture.

En variante, les deux demi arbres auraient pu être assemblés par un plan de joint longitudinal.

Le groupe 3 moteur d'entraînement en rotation de la roue comprend un moteur 31 et un réducteur 32. Le moteur 31 est de préférence un moteur sans balais, encore appelé moteur "brushless". Le réducteur 32 est d'une part, en prise avec l'arbre 311 d'entraînement du moteur 31, d'autre part, couplé directement, ou par l'intermédiaire d'au moins une pièce 321 tournante dite de transmission de mouvement, à la roue 2, pour l'entraînement en rotation de la roue. C'est la deuxième solution qui a été ici retenue.

Le réducteur 32 comprend un train 322 épicycloïdal. Ce train épicycloïdal peut être à un ou plusieurs étages. Dans l'exemple représenté, ce train épicycloïdal est à plusieurs étages. L'arbre du moteur 31 porte un planétaire en prise par engrènement avec des satellites portés par un premier porte-satellites. Ces satellites viennent en prise avec une couronne dentée du porte-satellites pour entraîner en rotation le porte-satellites, qui porte sur sa face opposée un planétaire. Ce planétaire transmet, via des satellites portés par un deuxième porte-satellites, son mouvement de rotation au deuxième porte-satellites. Ce deuxième porte-satellites porte à nouveau, sur sa face opposée, un planétaire en prise avec des satellites portés par un flasque de fermeture du corps 43 tubulaire. Ces satellites font saillie du flasque de fermeture à travers des lumières 4311 ménagées dans ledit flasque.

La transmission du mouvement de rotation de ces satellites à la roue s'opère ici par la pièce 321 tournante. Cette pièce 321 tournante est une pièce annulaire munie, au niveau du bord périphérique de délimitation de son ouverture, d'une denture 3211 apte à venir en prise par engrènement avec les satellites 3221 du train 322 épicycloïdal et sur l'une de ses faces, d'organes mâles, ou respectivement femelles 3212, aptes à venir en prise avec des organes femelles, ou respectivement mâles complémentaires portés par ladite roue.

Dans l'exemple représenté, la pièce 321 annulaire est équipée d'encoches 3212 venant en prise avec des nervures radiales ménagées à l'intérieur de la roue.

La roue 2 affecte ici la forme générale d'une sphère et est formée de deux demi-coquilles assemblées.

En variante par rapport à ce qui est décrit ci-dessus, l'arbre de roue aurait pu être réalisé d'une seule pièce et le groupe moteur rapporté sur ledit arbre.

La base 5 affecte quant à elle la forme générale d'un plateau muni d'une ouverture traversante formant l'ouverture 6 traversante du passage de roue. Ce plateau peut être réalisé sous forme d'un simple plateau annulaire rapporté sur un deuxième plateau rectangulaire comme illustré aux figures, ou être réalisé d'une seule pièce avec le plateau rectangulaire. Bien évidemment, la base 5 peut affecter un grand nombre de formes, selon les caractéristiques de l'engin et en particulier, selon les caractéristiques du reste du châssis de l'engin.

La coiffe 7 qui forme une cloche, présente ici une forme générale hémisphérique. Cette coiffe 7 est maintenue en applique sur la base 5 par un couvercle 10 délimitant, avec au moins une partie de la base 5, un boitier à l'intérieur duquel sont disposés au moins les moyens 8 d'entraînement en rotation de la coiffe 7. Des joints 72, 73 d'étanchéité sont prévus pour assurer une fermeture étanche du boîtier.

Ce couvercle 10 est ici formé par une plaque de forme générale annulaire qui vient fermer une cavité annulaire s'étendant entre deux rebords sensiblement circulaires de la base. Un élargissement de la cavité de la base et du couvercle est prévu pour loger les moyens 8 d'entraînement en rotation de la coiffe 7.

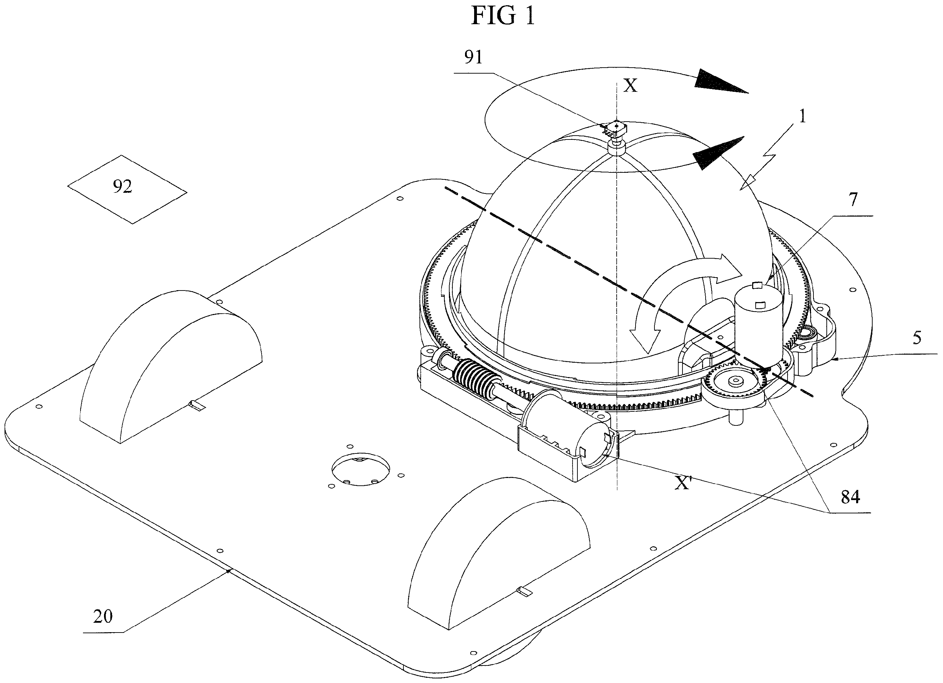

Les moyens 8 d'entraînement en rotation de la coiffe 7 sont des moyens 8 moteurs formés par une pièce d'engrènement réalisée ici sous forme d'une vis 81 sans fin portée par la base 5. Cette vis sans fin, entraînée en rotation par un moteur 84, vient en prise avec une couronne 82 dentée, portée par la coiffe 7. La couronne 82 dentée est disposée tangentiellement à la vis sans fin 81. Cette couronne 82 dentée est ménagée au niveau de la base de la coiffe, sur le pourtour extérieur de la coiffe. L'entraînement en rotation de la vis 81 sans fin par le moteur couplé à ladite vis sans fin permet donc, par l'intermédiaire de la couronne 82 dentée, l'entraînement en rotation de la coiffe 7 par rapport à la base 5. En variante, à la figure 1, deux pignons d'entraînement en rotation de la couronne ont été représentés.

Pour parfaire cet entraînement en rotation de la coiffe 7, des pignons ou galets 83 de centrage disposés sur la base 5, sur un cercle concentrique à la couronne 82 dentée, peuvent être prévus.

La coiffe 7 est ainsi montée mobile à rotation par rapport à la base 5 autour d'un axe XX' dit vertical passant par l'ouverture 6 traversante de la base et s'étendant sensiblement orthogonalement à l'arbre de la roue, en particulier perpendiculairement à l'axe longitudinal dudit arbre. Cet axe XX' passe de préférence par le centre de la roue et s'étend perpendiculairement au plan de l'ouverture 6 traversante de la base.

La coiffe comporte encore un orifice traversant pour le passage de câbles de liaison entre l'ensemble formé du groupe 3 moteur et des batteries 11 et l'extérieur de la roue. Ce passage traversant est disposé sur la coiffe, sur, ou au voisinage immédiat de, la ligne formée par l'axe XX' de rotation de la coiffe 7.

Le groupe 3 moteur d'entraînement en rotation de la roue et les moyens 8 d'entraînement en rotation de la coiffe sont configurés pour être pilotés par l'unité 12 de pilotage à partir des données fournies par les moyens 9 de fourniture de données d'entrée.

Ces moyens 9 de fourniture d'entrée de données peuvent comprendre au moins des moyens 91 d'acquisition de données et/ou une interface 92 d'entrée de données, encore appelé interface homme machine, et/ou une mémoire 93 de stockage de données prédéfinies.

Dans l'exemple représenté, les moyens 91 d'acquisition de données incluent un capteur de la position angulaire de la coiffe 7 par rapport à la base 5, un capteur de géolocalisation, et éventuellement un capteur de détection de chocs.

Le capteur de détermination de la position angulaire de la coiffe est, de préférence, disposé sur la coiffe sur ou au voisinage immédiat de la ligne formée par l'axe XX' de rotation de la coiffe 7.

L'interface 92 peut comprendre au moins une télécommande et/ou un écran tactile et/ou un clavier. Dans l'exemple illustré, seule une télécommande a été représentée.

L'unité 12 de pilotage comprend des moyens de traitement électroniques et/ou informatiques des données, tels qu'un microprocesseur associé à une mémoire de travail.

Lorsque l'expression "l'unité de pilotage est configurée pour" est utilisée, cela signifie que le microprocesseur comprend des instructions pour réaliser l'action.

A partir desdites données d'entrée, l'unité de pilotage est donc configurée pour commander le fonctionnement du groupe moteur d'entraînement en rotation de la roue 2, pour permettre la propulsion de l'engin, et des moyens 8 d'entraînement en rotation de la coiffe, pour diriger l'engin.

## Revendications

1. Engin (20) roulant à déplacement automatique exempt de conducteur assis ou marchant derrière l'engin, encore appelé robot, cet engin (20) comprenant au moins des moyens d'entrainement en déplacement de l'engin, une unité (12) de pilotage des moyens d'entrainement en déplacement de l'engin, des moyens (9) de fourniture de données d'entrée à ladite unité (12) de pilotage, ladite unité (12) de pilotage étant configurée pour, à partir desdites données d'entrée, piloter lesdits moyens d'entrainement en déplacement de l'engin, ces moyens d'entrainement en déplacement de l'engin comprenant au moins trois roues, l'une des roues étant une roue (2) motrice et directrice, **caractérisé en ce que** ladite roue (2) motrice et directrice se présente sous forme d'un ensemble (1) électromécanique comprenant, pour la propulsion de la roue (2), un groupe (3) moteur d'entrainement en rotation de la roue, au moins une batterie (11) d'alimentation en énergie du groupe (3) moteur, et un arbre (4) autour duquel la roue (2) est apte à être entrainée en rotation par ledit groupe (3) moteur, ledit groupe (3) moteur d'entrainement en rotation de la roue (2) motrice et directrice et la au moins une batterie (11) d'alimentation en énergie du groupe (3) moteur étant logés à l'intérieur de la roue (2) motrice et directrice.

2. Engin (20) selon la revendication 1, **caractérisé en ce que** ledit ensemble (1) électromécanique comprend pour la direction de la roue (2), une base (5) de liaison dudit ensemble (1) à l'engin (20), ladite base (5), munie d'une ouverture (6) traversante de passage de roue, étant surmontée, côté face dite du dessus de la base (5), d'une coiffe (7), venant à recouvrement de l'ouverture (6), cette coiffe (7) portant l'arbre (4) autour duquel la roue (2), qui fait partiellement saillie côté face du dessous de la base pour venir en appui au sol, est apte à être entraînée en rotation, ladite coiffe (7) étant, par rapport à la base (5), montée, par l'intermédiaire de moyens (8) d'entrainement, mobile à rotation autour d'un axe (XX') dit vertical passant par l'ouverture (6) et s'étendant sensiblement orthogonalement à l'arbre (4) de roue.

3. Engin (20) selon l'une des revendications précédentes, **caractérisé en ce que** les moyens (9) de fourniture de données d'entrée comprennent au moins des moyens (91) d'acquisition de données et/ou une interface (92) d'entrée de données, encore appelé interface homme machine, et/ou une mémoire (93) de stockage de données prédéfinies.

4. Engin (20) selon la revendication 3, **caractérisé en ce que** les moyens (91) d'acquisition de données incluent au moins un capteur de la position angulaire de la coiffe (7) par rapport à la base (5) et de préférence au moins un capteur de géolocalisation.

5. Engin (20) selon la revendication 3, **caractérisé en ce que** ladite interface (92) comprend de préférence au moins une télécommande et/ou un écran tactile et/ou un clavier.

6. Engin (20) selon l'une des revendications précédentes prise en combinaison avec la revendication 2, **caractérisé en ce que** l'arbre (4) de roue fait saillie à chacune de ses extrémités de la roue (2) pour être retenu, au niveau de chacune de ses extrémités, à l'intérieur de la coiffe (7), de préférence par l'intermédiaire de logements (71) formant paliers ménagés à l'intérieur de la coiffe.

7. Engin (20) selon l'une des revendications précédentes prise en combinaison avec la revendication 2, **caractérisée en ce que** l'arbre (4) de roue est formé de deux demi-arbres (41,42) et de moyens (43) de liaison des deux demi-arbres (41, 42) entre eux.

8. Engin (20) selon l'une des revendications précédentes prise en combinaison avec la revendication 2, **caractérisé en ce que** le groupe (3) moteur d'entrainement en rotation de la roue comprend un moteur (31) et un réducteur (32), ledit réducteur (32) étant, d'une part, en prise avec l'arbre (311) d'entrainement du moteur (31), d'autre part, couplé directement, ou par l'intermédiaire d'au moins une pièce (321) tournante dite de transmission de mouvement, à la roue (2), pour l'entrainement en rotation de la roue.

9. Engin (20) selon la revendication 8, **caractérisé en ce que** le réducteur (32) comprend un train (322) épicycloïdal à au moins un étage.

10. Engin (20) selon l'une des revendications précédentes prise en combinaison avec la revendication 2, **caractérisé en ce que** la coiffe (7) présente une forme générale hémisphérique.

11. Engin (20) selon l'une des revendications précédentes prise en combinaison avec la revendication 2, **caractérisé en ce que** le groupe (3) moteur d'entrainement en rotation de la roue et les moyens (8) d'entrainement en rotation de la coiffe sont configurés pour être pilotés par l'unité (12) de pilotage à partir des données fournies par les moyens (9) de fourniture de données d'entrée.

12. Engin (20) selon l'une des revendications précédentes, **caractérisé en ce que** les roues (22) autres que la roue (2) motrice et directrice sont des roues (22) non motrices et non directrices.

13. Engin (20) selon l'une des revendications précédentes prise en combinaison avec la revendication 2, **caractérisé en ce que** la coiffe (7) est maintenue en applique sur la base (5) par un couvercle (10) délimitant, avec au moins une partie de la base (5), un boitier, à l'intérieur duquel sont disposés au moins les moyens (8) d'entrainement en rotation de la coiffe (7).

14. Engin (20) selon l'une des revendications précédentes prise en combinaison avec la revendication 2, **caractérisé en ce que** les moyens (8) d'entrainement en rotation de la coiffe (7) sont des moyens (8) d'entraînement moteurs formés par au moins une pièce d'engrènement (81), telle qu'une vis sans fin ou un pignon, porté par la base (5) et en prise avec une couronne (82) dentée portée par la coiffe (7).

15. Engin (20) selon l'une des revendications précédentes prise en combinaison avec la revendication 2, **caractérisé en ce que** la base (5) affecte la forme générale d'un plateau muni d'une ouverture traversante formant l'ouverture (6) traversante de passage de roue.

## Patentansprüche

1. Rollendes Gerät (20) mit automatischer Bewegung ohne sitzenden oder hinter dem Gerät gehenden Fahrer, auch bezeichnet als Roboter, wobei dieses Gerät (20) mindestens Mittel zum Antrieb des Geräts, eine Einheit (12) zur Führung der Mittel zum Antrieb des Geräts, Mittel (9) zur Lieferung von Eingangsdaten an die Einheit zur Führung (12) umfasst, wobei die Einheit (12) zur Führung konfiguriert ist, um ausgehend von den Eingangsdaten die Mittel zum Antrieb des Geräts zu führen, wobei diese Mittel zum Antrieb des Geräts mindestens drei Räder umfassen, wobei eines der Räder ein motorgetriebenes und leitendes Rad (2) ist, **dadurch gekennzeichnet, dass** das motorgetriebene und leitende Rad (2) die Form einer elektromechanischen Einheit (1) aufweist, umfassend, für den Vortrieb des Rads (2), eine Motorgruppe (2) zur Rotation des Rads, mindestens eine Batterie (11) zur Versorgung der Motorgruppe (3) mit Energie, und eine Welle (4), um die das Rad (2) ausgelegt ist, um durch die Motorgruppe (3) in Rotation versetzt zu werden, wobei die Motorgruppe (3) zur Rotation des motorgetriebenen und leitenden Rads (2) und die mindestens eine Batterie (11) zur Versorgung der Motorgruppe (3) mit Energie, im Inneren des motorgetriebenen und leitenden Rads (2) aufgenommen sind.

2. Gerät (20) nach Anspruch 1, **dadurch gekennzeichnet, dass** die elektromechanische Einheit (1) für die Leitung des Rads (2) eine Basis (5) zur Verbindung der Einheit (1) mit dem Gerät (20) umfasst, wobei die Basis (5), ausgestattet mit einer quer liegenden Öffnung (6) zum Durchgang des Rads, an der Seite, bezeichnet als über der Basis (5), mit einer Abdeckung (7) überlagert ist, die die Öffnung (6) abdeckt, wobei diese Abdeckung (7) die Welle (4) trägt, um die das Rad (2), das teilweise an der Seite unter der Basis vorspringt, um auf dem Boden aufzuliegen, ausgelegt ist, um in Rotation versetzt zu werden, wobei die Abdeckung (7), mit Bezug auf die Basis (5), mit Hilfe von Antriebsmitteln (8), beweglich in Rotation um eine Achse (XX'), bezeichnet als vertikal, die durch die Öffnung (6) geht und sich im Wesentlichen orthogonal zur Welle (4) des Rads erstreckt, montiert ist.

3. Gerät (20) nach einem der vorhergehenden Ansprüche, **dadurch gekennzeichnet, dass** die Mittel (9) zur Lieferung von Eingangsdaten mindestens Mittel (91) zur Erfassung von Daten und/oder eine Schnittstelle (92) zum Eingang von Daten umfassen, auch bezeichnet als Mensch-Maschine-Schnittstelle, und/oder einen Speicher (93) zur Ablage von vordefinierten Daten.

4. Gerät (20) nach Anspruch 3, **dadurch gekennzeichnet, dass** die Mittel (91) zur Erfassung von Daten mindestens einen Sensor der Winkelposition der Abdeckung (7) mit Bezug auf die Basis (5) und vorzugsweise mindestens einen Geolokalisierungssensor einschließen.

5. Gerät (20) nach Anspruch 3, **dadurch gekennzeichnet, dass** die Schnittstelle (92) vorzugsweise mindestens eine Fernsteuerung und/oder einen Berührungsbildschirm und/oder eine Tastatur umfasst.

6. Gerät (20) nach einem der vorhergehenden Ansprüche, in Kombination mit Anspruch 2, **dadurch gekennzeichnet, dass** die Welle (4) des Rads an jedem ihrer Enden vom Rad (2) vorspringt, um, auf dem Niveau jedes ihrer Enden, im Inneren der Abdeckung (7) zurückgehalten zu werden, vorzugsweise mit Hilfe von Aufnahmen (71), die Lager bilden, die im Inneren der Abdeckung angeordnet sind.

7. Gerät (20) nach einem der vorhergehenden Ansprüche, in Kombination mit Anspruch 2, **dadurch gekennzeichnet, dass** die Welle (4) des Rads aus zwei Halbwellen (41, 43) und Mitteln (43) zur Verbindung der zwei Halbwellen (41, 42) untereinander gebildet ist.

8. Gerät (20) nach einem der vorhergehenden Ansprüche, in Kombination mit Anspruch 2, **dadurch gekennzeichnet, dass** die Motorgruppe (3) zur Rotation des Rads einen Motor (31) und ein Untersetzungsgetriebe (32) umfasst, wobei das Untersetzungsgetriebe (32) einerseits mit der Antriebswelle des Motors (311) eingreift, andererseits direkt oder mit Hilfe von mindestens einem drehenden Stück (321), bezeichnet als zur Bewegungsübertragung, mit dem Rad (2) gekoppelt ist, um das Rad in Rotation zu versetzen.

9. Gerät (20) nach Anspruch 8, **dadurch gekennzeichnet, dass** das Untersetzungsgetriebe (32) ein Planetengetriebe (322) auf mindestens einer Stufe umfasst.

10. Gerät (20) nach einem der vorhergehenden Ansprüche, in Kombination mit Anspruch 2, **dadurch gekennzeichnet, dass** die Abdeckung (7) im Wesentlichen halbkugelförmig ist.

11. Gerät (20) nach einem der vorhergehenden Ansprüche, in Kombination mit Anspruch 2, **dadurch gekennzeichnet, dass** die Motorgruppe (3) zur Rotation des Rads und die Mittel (8) zur Rotation der Abdeckung konfiguriert sind, um von der Führungseinheit (12) auf der Grundlage der Daten geführt werden, die von den Mitteln (9) zur Lieferung von Eingangsdaten geliefert werden.

12. Gerät (20) nach einem der vorhergehenden Ansprüche, **dadurch gekennzeichnet, dass** die Räder (22) außer dem Antriebs- (2) und Führungsrad Nicht-Antriebs- (22) und Nicht-Führungsräder sind.

13. Gerät (20) nach einem der vorhergehenden Ansprüche, in Kombination mit Anspruch 2, **dadurch gekennzeichnet, dass** die Abdeckung (7) durch einen Deckel (10) auf der Basis (5) aufliegend gehalten wird, der mit mindestens einem Teil der Basis (5) ein Gehäuse begrenzt, in dessen Inneren mindestens die Mittel (8) zur Rotation der Abdeckung (7) angebracht sind.

14. Gerät (20) nach einem der vorhergehenden Ansprüche, in Kombination mit Anspruch 2, **dadurch gekennzeichnet, dass** die Mittel (8) zur Rotation der Abdeckung (7) Motorantriebsmittel (8) sind, die durch mindestens ein Eingriffsstück (81) gebildet sind, wie z. B. eine Endlosschraube oder ein Ritzel, getragen von der Basis (5) und in Eingriff mit einem Zahnkranz, der von der Abdeckung (7) getragen wird.

15. Gerät (20) nach einem der vorhergehenden Ansprüche, in Kombination mit Anspruch 2, **dadurch gekennzeichnet, dass** die Basis (5) die allgemeine Form einer Platte aufweist, ausgestattet mit einer quer liegenden Öffnung, die die quer liegende Öffnung (6) zum Durchgang des Rads bildet.

## Claims

1. An automatically moving wheeled vehicle (20) without a driver seated or walking behind the vehicle, also called a robot, this vehicle (20) comprising at least vehicle movement drive means, a control unit (12) for the vehicle movement drive means, means (9) for supplying input data to said control unit (12), said control unit (12) being configured, from said input data, to control said vehicle movement drive means, these vehicle movement drive means comprising at least three wheels, one of the wheels being a drive and steering wheel (2), **characterized in that** said drive and steering wheel (2) assumes the form of an electromechanical assembly (1) comprising, for the propulsion of the wheel (2), a motor unit (3) driving the rotation of the wheel, at least one battery (11) for supplying energy to the motor unit (3), and a shaft (4) around which the wheel (2) is able to be rotated by said motor unit (3), said motor unit (3) for driving the rotation of the drive and steering wheel (2) and the at least one battery (11) for supplying energy to the motor unit (3) being housed inside the drive and steering wheel (2).

2. The vehicle (20) according to claim 1, **characterized in that** said electromechanical assembly (1) comprises, for the steering of the wheel (2), a base (5) for connecting said assembly (1) to the vehicle (20), said base (5), provided with a wheel passage through opening (6), being topped, on the front side called top of the base (5), with a cap (7), covering the opening (6), this cap (7) bringing the shaft (4) around which the wheel (2), which partially protrudes on the front side from the bottom of the base to bear on the ground, is able to be rotated, said cap (7) being, relative to the base (5), mounted, via drive means (8), rotatable around a so-called vertical axis (XX') passing through the opening (6) and extending substantially orthogonally to the wheel shaft (4).

3. The vehicle (20) according to one of the preceding claims, **characterized in that** the means (9) for supplying input data comprise at least data acquisition means (91) and/or a data input interface (92), also called man-machine interface, and/or a predefined data storage memory (93).

4. The vehicle (20) according to claim 3, **characterized in that** the data acquisition means (91) include at least one sensor of the angular position of the cap (7) relative to the base (5) and preferably at least one geolocation sensor.

5. The vehicle (20) according to claim 3, **characterized in that** said interface (92) preferably comprises at least one remote control and/or a touch-sensitive screen and/or a keypad.

6. The vehicle (20) according to one of the preceding claims combined with claim 2, **characterized in that** the wheel shaft (4) protrudes at each of its ends from the wheel (2) to be retained, at each of its ends, inside the cap (7), preferably via housings (71) forming bearings arranged inside the cap.

7. The vehicle (20) according to one of the preceding claims combined with claim 2, **characterized in that** the wheel shaft (4) is made up of two half-shafts (41, 42) and means (43) for connecting the two half-shafts (41, 42) to one another.

8. The vehicle (20) according to one of the preceding claims combined with claim 2, **characterized in that** the motor unit (3) for rotating the wheel comprises a motor (31) and a reducer (32), said reducer (32) being on the one hand engaged with the shaft (311) for driving the motor (31), on the other hand coupled directly, or via at least one rotating part (321) called movement transmission part, to the wheel (2), for driving the rotation of the wheel.

9. The vehicle (20) according to claim 8, **characterized in that** the reducer (32) comprises a planetary gear (322) with at least one stage.

10. The vehicle (20) according to one of the preceding claims combined with claim 2, **characterized in that** the cap (7) has a generally hemispherical shape.

11. The vehicle (20) according to one of the preceding claims combined with claim 2, **characterized in that** the motor unit (3) for driving the rotation of the wheel and the means (8) for driving the rotation of the cap are configured to be controlled by the control unit (12) from data supplied by the means (9) for supplying input data.

12. The vehicle (20) according to one of the preceding claims, **characterized in that** the wheels (22) other than the drive and steering wheel (2) are non-drive and non-steering wheels (22).

13. The vehicle (20) according to one of the preceding claims combined with claim 2, **characterized in that** the cap (7) is kept pressed on the base (5) by a cover (10) delimiting, with at least part of the base (5), a housing, inside which at least the means (8) for driving the rotation of the cap (7) are arranged.

14. The vehicle (20) according to one of the preceding claims combined with claim 2, **characterized in that** the means (8) for driving the rotation of the cap (7) are motor driving means (8) formed by at least one meshing part (81), such as a worm or a pinion, carried by the base (5) and engaged with a crown gear (82) carried by the cap (7).

15. The vehicle (20) according to one of the preceding claims combined with claim 2, **characterized in that** the base (5) assumes the general form of a plate provided with a through opening forming the wheel passage through opening (6).
